# EUROPÄISCHE PATENTANMELDUNG

(11) **EP 0 572 872 A2**
(43) Veröffentlichungstag der Anmeldung: **08.12.1993**
(21) Anmeldenummer: 93108247.3
(22) Anmeldetag: 21.05.1993
(51) Int. Cl.: H04Q 11/04, H04M 19/08

(54) **Schaltungsanordnung zur Reduzierung von Stromverbrauch eines Telekommunikationsendegerätes**

(30) Priorität: 29.05.1992 DE 4217857
(71) Anmelder: Alcatel SEL Aktiengesellschaft, D-70435 Stuttgart (DE); ALCATEL N.V., NL-1077 XX Amsterdam (NL)
(72) Erfinder: Foth, Dr, Egmont, W-7016 Gerlingen (DE); Schärfschen, Ernst-Joachim, W-7530 Pforzheim (DE)
(74) Vertreter: Knecht, Ulrich Karl

(57) **Zusammenfassung**

Erweiterung eines Telekommunikationsendgerätes um eine beliebige Anzahl von Baugruppen, mit der Möglichkeit zeitweise unbenutzte Baugruppen abzuschalten.

Mechanische Lösung des elektrischen Kontaktes steckbarer Baugruppen. Kein weiteres Hinzufügen von Baugruppen.

Schaltungsanordnung mit einem elektronischen Schalter zur Unterbrechung der Stromversorgung. Gleichzeitiges Auftrennen von Datenleitungen mittels Schaltkreisen mit Tristateausgängen.

Ausrüstung von z.B. ISDN-Terminals mit umfangreichen Zusatzbaugruppen, ohne daß Notstromberechtigung gesperrt wird; Drastische Reduzierung des Stromverbrauches;

## Beschreibung

Die Erfindung betrifft eine Schaltungsanordnung zur Reduzierung des Stromverbrauches eines Telekommunikationsendgerätes.

Eine bisher bekannte Möglichkeit den Stromverbrauch eines Telekommunikationsendgerätes zu reduzieren liegt darin, steckbare Baugruppen zu konzipieren. Durch mechanische Lösung des elektrischen Kontaktes wird dann die Stromversorgung der Baugruppen unterbrochen.

Eine weitere bekannte Möglichkeit ist, für den Fall, daß Notstrombetrieb vorliegt und gemäß einer Auflage über die maximale Leistung die im Notstromfall verbraucht werden darf [DKZ-N1 1.2], daß keine weiteren Baugruppen mehr zusätzlich in ein Telekommunikationsendgerät eingebaut werden. Dies hat aber wiederum den Nachteil, daß Anwenderwünsche bezüglich zusätzlicher Leistungsmerkmale, die aber nur durch zusätzliche Baugruppen erreicht werden können, nicht erfüllt werden können.

Der Erfindung liegt die Aufgabe zugrunde, eine Schaltungsanordnung zu entwickeln, welche, zur Reduzierung des Stromverbrauches eines Telekommunikationsendgerätes beiträgt, mit der Möglichkeit der gleichzeitigen Erweiterung des Endgerätes mit zusätzlichen Baugruppen.

Die Aufgabe wird erfindungsgemäß gelöst durch die Lehre des ersten Patentanspruchs.

Ein Vorteil der Erfindung liegt darin, daß in Telekommunikationsendgeräten umfangreiche, zusätzliche Baugruppen eingebaut werden können. Zum Beispiel im Notstrombetrieb werden die zusätzlichen Baugruppen, deren Funktionen nicht unbedingt sichergestellt sein müssen, elektronisch von der Stromversorgung abgetrennt, und der Stromverbrauch wird somit auf ein vorgeschriebenes Minimum reduziert. Eine mechanische Trennung steckbarer Baugruppen wäre zu umständlich und zu unhandlich und würde, bei einer Vielzahl von abzuschaltenden Baugruppen, zu lange dauern.

Weiterhin ist vorteilhaft, daß die Telekommunikationsendgeräte um fast beliebig viele Baugruppen, und somit auch Leistungsmerkmale erweitert werden können, ohne daß die Anforderungen bezüglich der im Notstrombetrieb maximal zu verbrauchenden Leistung, nicht eingehalten werden können.

Ein weiterer Vorteil ist, daß im Betrieb, durch die Abschaltung der Baugruppen die nicht benötigt werden, Strom eingespart wird. Somit sinken entsprechend die laufenden Kosten.

Vorteilhafte Weiterentwicklungen der Schaltungsanordnung sind den Unteransprüchen 2 und 3 zu entnehmen.

Wie in Unteranspruch 3 beschrieben, findet die Schaltungsanordnung nach Anspruch 1 besondere Verwendung im Notstrombetrieb. Im Notstrombetrieb werden, bezüglich des maximal erlaubten Stromverbrauches, festgelegte Forderungen an ein Telekommunikationsendgerät gestellt. Zur Einhaltung dieser Forderungen ist eine Abschaltung von einigen oder von allen bis auf eine Baugruppen nötig. Lediglich die wichtigen Funktionen und entsprechend die Baugruppen bleiben im Notstromfall eingeschaltet.

Die Erfindung und eine vorteilhafte Weiterbildung der Erfindung werden anhand der folgenden Figuren erläutert.
- Fig. 1: Schaltungsanordnung nach Anspruch 1,
- Fig. 2: Schaltungsanordnung nach Anspruch 3.

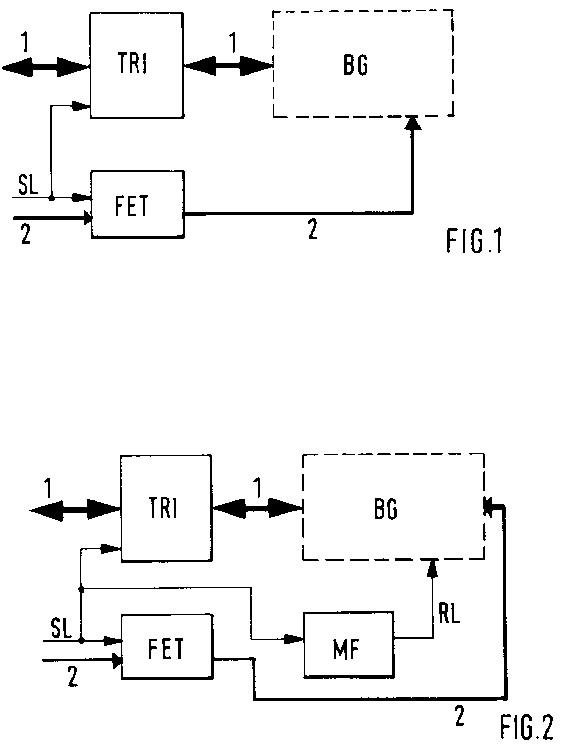

Die erfindungsgemäße Schaltungsanordnung nach Anspruch 1 wird anhand von Fig. 1 für das Beispiel eines ISDN-Telefons im Notstrombetrieb er läutert, da bei notspeiseberechtigten ISDN-Telefonen im Notstrombetrieb nur ein stark eingeschränkter Stromverbrauch zulässig ist. In diesem sogenannten "emergency mode" müssen alle nicht unbedingt erforderlichen Verbraucher abgeschaltet werden, da nur ein vorgegebener maximaler Stromverbrauch erlaubt ist.

Eine Schaltungsanordnung zur Reduzierung des Stromverbrauches eines ISDN-Telefons im Notstrombetrieb besteht aus wenigstens einer, im Notstrombetrieb abschaltbaren Baugruppe BG. Im Notstrombetrieb können für dieses Beispiel alle zusätzlichen Leistungsmerkmale wie z.B. Displayanzeige, Lauthören, Freisprechen, usw. abgeschaltet werden. Die wichtige Funktion, die auch im Notstromfall unbedingt erhalten bleiben muß, ist die Funktion Telefonieren. Eine erste Signalleitung SL, welche mit einem elektronischen Schalter FET, sowie mit einem Schaltkreis mit Tristateausgängen TRI verbunden ist, überträgt ein Signal welches anzeigt, ob Notstrombetrieb vorliegt oder nicht. Dieses Signal wird von einem Mikroprozessor (nicht dargestellt) auf die erste Signalleitung SL gegeben. Ein Beispiel für einen solchen Schaltkreis mit Tristateausgängen ist der 74HC245 von Texas Instruments.

Der elektronische Schalter FET schaltet die Stromversorgung 2 der wenigstens einen Baugruppe BG. Im Notstromfall wird der elektronische Schalter FET geöffnet, und unterbricht somit die Stromversorgung 2 der wenigstens einen Baugruppe BG. Vorzugsweise wird die Stromversorgung 2 mit einem Feld-Effekt-Transistor abgeschaltet. Die eine abzuschaltende Baugruppe BG kann z.B. ein V.24-Terminal-Adapter sein.

Zwischen dem Schaltkreis mit Tristateausgängen TRI und der wenigstens einen Baugruppe BG befinden sich Datenleitungen 1. Ebenfalls befinden sich Datenleitungen 1 zwischen dem Schaltkreis mit Tristateausgängen TRI und z.B. einem Datenbus (nicht dargestellt). Daten werden über den Schaltkreis mit Tristateausgängen TRI zwischen dem Datenbus und der wenigstens einen Baugruppe BG, z.B. dem V.24-Terminal-Adapter, transportiert.

Für den Fall, daß mehr Datenleitungen vorhanden sind, als der Schaltkreis mit Tristateausgängen TRI Ausgänge hat, wird entsprechend die Anzahl der Schaltkreise mit Tristateausgängen erhöht.

Für den Fall, daß Notstrombetrieb herrscht, daß ein entsprechendes Signal über die erste Signalleitung SL übertragen wird, und daß die Stromversorgung 2 aufgetrennt wird, schaltet der Schaltkreis mit Tristateausgängen TRI in den hochohmigen Zustand. Dies entspricht einer Abtrennung eines noch anliegenden Potentials an den Datenleitungen 1. Dies dient zur Vermeidung von Latch-up Effekten auf den weiterhin spannungsführenden Datenleitungen 1.

Mittels dieser Schaltungsanordnung kann der Stromverbrauch eines ISDN-Terminals drastisch gesenkt werden.

So kann beispielsweise bei einem V.24-Terminal-Adapter eine Erniedrigung des Stromverbrauches auf 1/200 des Stromverbrauches im Normalbetrieb erzielt werden.

Die vorteilhafte Weiterbildung nach Anspruch 3 wird mittels Fig. 2 ebenfalls für ein ISDN-Telefon im Notstrombetrieb erläutert.

Die Schaltungsanordnung entspricht der Schaltungsanordnung in der vorangegangenen Beschreibung. Zusätzlich führt die erste Signalleitung SL auf eine monostabile Kippstufe MF, im folgenden Monoflop genannt. Über eine zweite Signalleitung RL ist der Monoflop MF mit der wenigstens einen Baugruppe BG verbunden.

Für den Fall, daß kein Notstrombetrieb mehr vorliegt, wird ein entsprechendes Signal z.B. von dem Mikroprozessor erzeugt. Dies führt dazu, daß die Stromversorgung 2 der wenigstens einen Baugruppe BG wieder zugeschaltet wird, der elektronische Schalter FET also schließt.

Zudem generiert der Monoflop MF einen Rücksetzimpuls, im folgenden Reset-Impuls genannt, welcher über die zweite Signalleitung RL auf die wenigstens eine Baugruppe BG übertragen wird. Dort erfolgt mittels des Reset-Impulses die Zuschaltung der, aus komplexen Logiken bestehenden, wenigstens eine Baugruppe. Unter komplexen Logiken werden alle Bauelemente einer Baugruppe verstanden, die auf einen bestimmten Anfangswert zurückgesetzt, also initialisiert werden müssen, wie z.B. ein Mikroprozessor, ein Speicher, ein Register, usw. Die komplexen Logiken würden ohne den Reset-Impuls nicht zugeschaltet werden können. Mittels des Reset-Impulses erfolgt eine Initialisierung, und somit die Zuschaltung.

Die hier aufgeführten Beispiele wurden für den Notstrombetrieb erläutert. Aber auch im Nichtstrombetrieb können diese Schaltungsanordnungen eingesetzt werden. So kann eine Abschaltung aller Baugruppen im normalen Betrieb erfolgen, für den Fall, daß diese zeitweise nicht benutzt werden.

## Patentansprüche

1. Schaltungsanordnung zur Reduzierung des Stromverbrauches eines Telekommunikationsendgerätes, bestehend aus wenigstens einer abschaltbaren Baugruppe (BG), mit einer ersten Signalleitung (SL), die mit einem elektronischen Schalter (FET) verbunden ist, welcher eine Stromversorgung (2) für die wenigstens eine Baugruppe (BG) schaltet, und mit einem
Schaltkreis mit Tristateausgängen (TRI) verbunden ist, welcher mit Datenleitungen (1) die zu der Baugruppe (BG) führen, verbunden ist und wobei zur Reduzierung des Stromverbrauches ein Signal über die erste Signalleitung (SL) übertragen wird, welches zur Folge hat, daß der elektronische Schalter (FET) die Stromversorgung (2) unterbricht daß das noch anliegende Potential an den Datenleitungen (1) von dem Schaltkreis mit Tristateausgängen (TRI) unterbrochen wird.

2. Schaltungsanordnung nach Anspruch 1, für dem Fall, daß die wenigstens eine Baugruppe (BG) aus komplexen Logiken besteht, die zu einer Initialisierung einen Rücksetz-Impuls benötigen, wofür zusätzlich eine monostabile Kippstufe (MF) an die erste Signalleitung (SL) angeschlossen wird und die monostabile Kippstufe (MF) über eine zweite Signalleitung (RL) mit der wenigstens einen Baugruppe (BG) verbunden ist, und die erste Signalleitung (SL) für den Fall, daß die Stromversorgung wieder zugeschaltet werden soll, ein entsprechendes Signal überträgt, die Stromversorgung (2) von dem elektronischen Schalter (FET) wieder zugeschaltet wird und die monostabile Kippstufe (MF) den Rücksetzimpuls generiert, der die Initialisierung der wenigstens einen Baugruppe (BG) vornimmt.

3. Schaltungsanordnung nach Anspruch 1 oder 2, zur Verwendung im Notstrombetrieb.
